# EUROPEAN PATENT SPECIFICATION

(11) **EP 2 505 832 B1**
(45) Date of publication and mention of the grant of the patent: **08.08.2018**
(21) Application number: 12162073.6
(22) Date of filing: 29.03.2012
(51) Int. Cl.: F03D 80/00, F03D 80/80, F03D 9/25

(54) **Wind turbine arrangement**
Windturbinenanordnung
Agencement d'éolienne

(30) Priority: 30.03.2011 DK 201170148; 30.03.2011 US 201161469246 P
(43) Date of publication of application: 03.10.2012
(73) Proprietor: Vestas Wind Systems A/S, 8200 Aarhus N (DK)
(72) Inventor: Donescu, Victor, Westford, Massachusetts 01886 (US); Popescu, Nicolae, Fort Collins, Colorado 80524 (US); Erichsen, Hans V., 8210 Århus V (DK)

(56) References cited:
- WO-A1-2010/108538
- WO-A2-2010/105852
- US-A1- 2011 049 994

## Description

### Background

The present invention relates to a wind turbine arrangement.

In a wind turbine arrangement, (see e.g. US 2011/049994) a power generator is typically connected to a power converter such as an AC/DC converter. Power conversion typically includes switching operations (for example for pulse width modulation) with may include fast rise and fall times. Thus, ripple at the swichting frequency may be caused on the connections (e.g. cables) between the power generator and the power converter. This may cause elecromagnetic interference (EMI) signals which may be conducted and radiated by the connections and which may effect electronic components of the wind turbine or even leak outside the wind turbine and affect nearby electronic systems.

It is desirable to avoid such negative effects.

### Summary of the Invention

According to an embodiment of the present invention, a wind turbine arrangement is provided comprising a wind turbine tower; a power generator arranged at the top of the wind turbine tower; a power converter arranged at the bottom of the tower the power converter is operated at a switching frequency within a switching frequency range; and a filter arranged at the bottom of the tower the filter is coupled to the power generator and the power converter such that the power generator is coupled to the power converter via the filter and the filter has a bandwidth adapted such that it filters out currents at frequencies in the switching frequency range, the filter coupled to the power generator by means of cables, and the filter connected to the power generator such that electric power generated by the generator is supplied via the cables and via the filter to the power converter, wherein at least one spacer is attached to the cables for spacing apart the cables.

According to one embodiment, the filter is an LC filter.

According to one embodiment, the filter is a low pass filter.

According to one embodiment, the cut-off frequency of the filter is below the minimum switching frequency at which the power generator is operated.

According to one embodiment, the power generator is configured to provide rotary electrical current and the cut-off frequency of the filter is above the maximum rotary frequency of the rotary electrical current provided by the power generator.

According to one embodiment, the filter is coupled to the power generator by means of cables and the filter is connected to the power generator such that electric power generated by the generator is supplied via the cables and via the filter to the power converter.

According to one embodiment, the cables extend along the wind turbine tower.

According to one embodiment, the cables extend inside the wind turbine tower.

According to one embodiment, the wind turbine arrangement further comprises at least one spacer attached to the cables for spacing apart the cables.

According to one embodiment, the cables are attached to the at least one spacer.

According to one embodiment, the cables extend through through-holes in the spacer.

According to one embodiment, the through-holes are arranged and the cables extend through the through-holes in the spacer such that cables carrying different phases of current supplied by the power generator are interleaved along the arrangement of through-holes.

According to one embodiment, the cables include at least one grounding cable and the through-holes are arranged and the cables extend through the through-holes in the spacer such that the cables carrying phases of current supplied by the power generator are at least partially interleaved with grounding cables along the arrangement of through-holes.

According to one embodiment, the at least one spacer is not fixedly attached to the wind turbine tower.

According to one embodiment, the at least one spacer is rotary.

According to one embodiment, the at least one spacer is suspended by at least one suspension rope.

According to one embodiment, the at least one spacer is suspended within the wind turbine tower such that its distance to the bottom of the wind turbine tower may change.

According to one embodiment, the at least one spacer is suspended within the wind turbine tower such that the its distance to the walls of the wind turbine tower may change.

According to one embodiment, the cables are single conductor cables.

According to one embodiment, the cables are medium-voltage cables.

According to one embodiment, the cables are cables designed to conduct currents of between 1kV and 35kV AC.

According to one embodiment, the cables are connected to the power generator by means of a slip ring system.

According to one embodiment, the slip ring system is arranged at the top of the wind turbine tower.

According to one embodiment, the wind turbine tower comprises a cable tract and the cables extend along the tower within the cable tract.

According to one embodiment, the cable tract encloses the cables.

According to one embodiment, the cable tract is a metallic housing.

According to one embodiment, the wind turbine generator arrangement further includes a dv/dt filter arranged such that the power generator and the power converter are connected via the dv/dt filter.

According to one embodiment, the dv/dt filter is arranged at the bottom of the tower.

According to one embodiment, the dv/dt filter is arranged at the bottom of the tower.

According to one embodiment, the dv/dt filteris arranged at the bottom of the tower.

According to one embodiment, the dv/dt filter is coupled between the power generator and the filter.

According to one embodiment, the dv/dt filter is coupled between the filter and the power converter.

According to one embodiment, the power converter includes an AC/DC converter.

According to one embodiment, the AC/DC converter includes at least one power switch operated at the switching frequency.

According to one embodiment, the switching frequency is changeable within the frequency range.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
Fig. 1 shows a schematic drawing of a wind turbine according to an embodiment of the present invention:
Fig. 2 shows a wind turbine generator arrangement according to an embodiment;
Fig. 3 shows a wind turbine arrangement according to an embodiment.
Fig. 4 shows a wind turbine arrangement according to an embodiment.
Fig. 5 shows spacers according to embodiments.
Fig. 6 shows a wind turbine according to an embodiment.
Fig. 7 shows a cross section of a wind turbine tower according to an embodiment.

### Description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments.

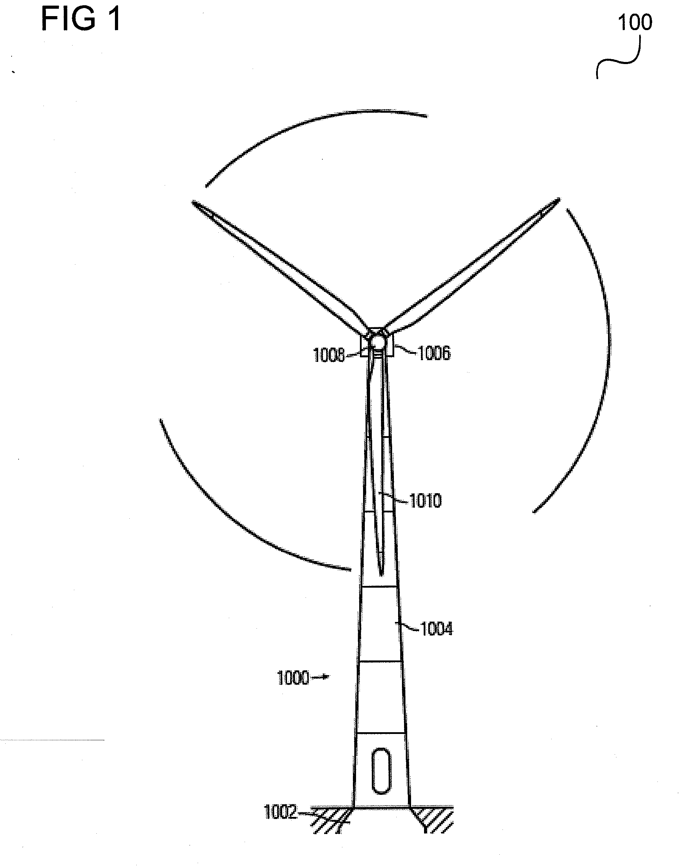

Fig. 1 illustrates a common setup of a wind turbine 1000 which may use the inventive method/system as described below. The wind turbine 1000 is mounted on a base 1002. The wind turbine 1000 includes a tower 1004 having a number of tower sections. A wind turbine nacelle 1006 is placed on top of the tower 1004. The wind turbine rotor includes a hub 1008 and at least one rotor blade 1010, e.g. three rotor blades 1010. The rotor blades 1010 are connected to the hub 1008 which in turn is connected to the nacelle 1006 through a low speed shaft which extends out of the front of the nacelle 1006.

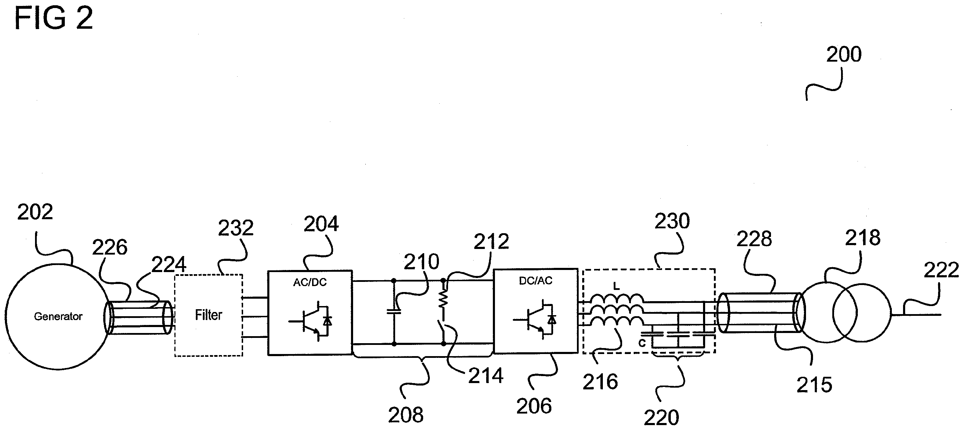

Fig. 2 shows a wind turbine generator arrangement 200 according to an embodiment. The arrangement 200 comprises a generator 202, an AC/DC (generator or machine side) converter 204, an DC/AC (line or grid side) converter 206, and a DC-link 208 connected between the AC/DC converter 204 and the DC/AC converter 206.

Output terminals of the generator 202 are connected via cables 224 to input terminals of the AC/DC converter 204. A first end of the DC-link 208 is connected to the output terminals of AC/DC converter 204, and the opposite end of the DC-link 208 is connected to input terminals of the DC/AC converter 206. The DC-link 208 comprises a DC-link capacitor 210 as well as a DC-link resistor 212 (also known as a load dump resistor or a chopper resistor). The DC-link resistor 212 can be activated/deactivated (connected between two arms of the DC-link 208 or disconnected therefrom) via a switch 214. The switch 214 is a power electronic switch according to an embodiment. Output terminals of DC/AC converter 206 are connected via a power line 215 including inductors/chokes 216 and capacitors 220 to a grid transformer 218. The inductors/chokes 216 and the capacitors 220 may be seen to form a first filter 230 for filtering out switching harmonics on the power line 215. The first filter 230 may also contain a resonance damping branch (not shown) to avoid resonance phenomenon.

During normal operation, the switch 214 is open and active power from the power generator flows through the line side converter, the machine side converter and grid transformer to the power grid.

The generator 202 is according to one embodiment located in the nacelle 1006 and the AC/DC converter 204 is in one embodiment located at the bottom level of the wind turbine 100, e.g. at the ground next to the tower 1004.

Thus, the cables 224 have to carry currents from the generator 202 to the AC/DC converter 204 which may employ pulse width modulation (PWM) with may have fast rise and fall times. Thus, ripple at the swichting frequency may be caused on the cables 224 (wherein each cable for example carries one phase of the output of the power generator 202 at for example 110Hz). This fast switching at the AC/DC converter 204 may cause elecromagnetic interference (EMI) signals which may be conducted and radiated from the cables 224 and which may effect electronic components of the wind turbine 1000 or even leak outside the wind turbine 1000 and affect nearby electronic systems.

For this, the wind turbine generator arrangement 200 may comprise a first shielding 226 to form a good high frequency return current path between the AC/CD converter 204 and the generator 202. Analogously, the wind turbine generator arrangement 200 may comprise a second shielding 228 to form a good high frequency return current path between the DC/AC converter 206 and the grid transformer 218. Further, according to one embodiment, a second filter 232 is arranged between the cables 224 and the AC/DC converter 204 as described in more detail in the following.

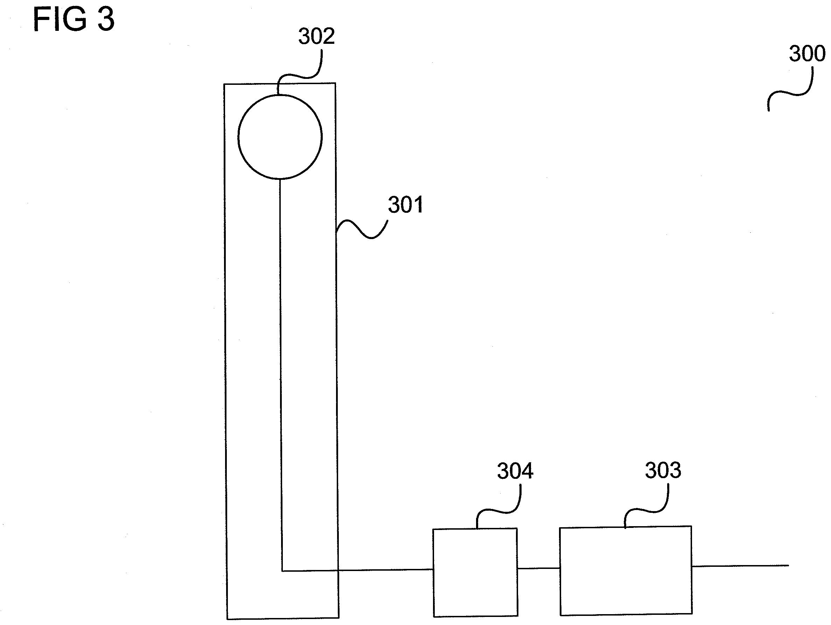

Fig. 3 shows a wind turbine arrangement 300 according to an embodiment.

The wind turbine arrangement 300 comprises a wind turbine tower 301 and a power generator arranged 302 at the top of the wind turbine tower.

The wind turbine arrangement 300 further comprises a power converter 303 arranged at the bottom of the tower 301 wherein the power converter 303 is operated at a switching frequency within a switching frequency range.

A filter 304 of the wind turbine arrangement 300 is arranged at the bottom of the tower 301 wherein the filter is coupled to the power generator 302 and the power converter 303 such that the power generator 302 is coupled to the power converter 303 via the filter 304 and wherein the filter 304 has a bandwidth adapted such that it filters out currents at frequencies in the switching frequency range.

In one embodiment, in other words, a wind turbine power generator, typically arranged at a wind turbine tower, is connected to a power converter arranged at the bottom of the tower via a filter that is adpated to filter out frequency ripples on the connections (e.g. cables extending through or at the sides of the tower), e.g. filters out signals at an undesired frequency such as the switching frequency of the power converter. The bandwidth is for example chosen to be low enough, e.g. to filter out switching frequency ripple currents caused by the switching of the power converter (e.g. switching of IGBTs or other power switches for AC/DC conversion) that would otherwise flow through the cables 224. The filter may also prevent strong voltage changes (i.e. high dv/dt or dv/dt peaks) on the cables 224.

It should be noted that the filter may reduce the control loop bandwidth of a control loop of the DC/AC converter (for example to a greater effect than a pure dv/dt limiting filter). The control loop bandwidth of the control loop of the DC/AC should be high enough to control the harmonics of the generator currents. According to one embodiment, the presence of the filter is taken into account at the design stage of the power generator 202.

It should further be noted that since the nacelle 1006 of the wind turbine 1000 may turn (e.g. to follow the find direction), the cables 224 may be twisted such that it the cables 224 (or the system of cables) may be subjected to a multitude of twisting cycles (e.g. up to 5 or 6 complete rotations). This may lead to mechanical damage to the internal components of the cables 224 or to the outer sheaths 224 of the cables. Further corona/partial discharge inception may be caused due to creation of air pockets inside the cables 224 or due to reduced clearance between the various cables in case they are provided with their own grounded metal screens.

Therefore, according to one embodiment, very flexible cables may be used, for example not comprising their own metal screens. Thus, internal damage during twisting and internal air pockets and partial discharges can be avoided.

Additionally or alternatively, according to one embodiment, insulating spacers are arranged between the cables 224, for example spacers that are foating or semi-floating, for example arranged freely to follow the movement of the cables 224, e.g. only attached to the cables 224 but not, for example, to the tower (e.g. the tower walls). Thus, external corona/partial discharges can be prevented preserving clearances between the cables 224 that have different electrical potentials. Further, damage to the outer sheaths by friction of the cables may be avoided.

According to one embodiment, the cables 224 may carry high currents from the power generator 202 to the AC/DC converter 204. This may lead to a high power dissipation in the cables 224, especially in the presence of skin effect, proximity effect and eddy effect. According to one embodiment, interleaved phase conductors are used, i.e. cables carrying different phases of the rotary current output by the power generator 202 are interleaved, for example are arranged in an interleaved fashion along the spacers used according to one embodiment. Further, according to one embodiment, single conductor cables with good clearance (between each other) are used (for example instead of trifilar cables). Thus, strong proximity effects between conductors of different phases can be prevented, as they may for example occur when all three phases are carried by one trifilar cable with too little clearance.

According to one embodiment, one or more earth conductors can be interleaved with the phase conductors.

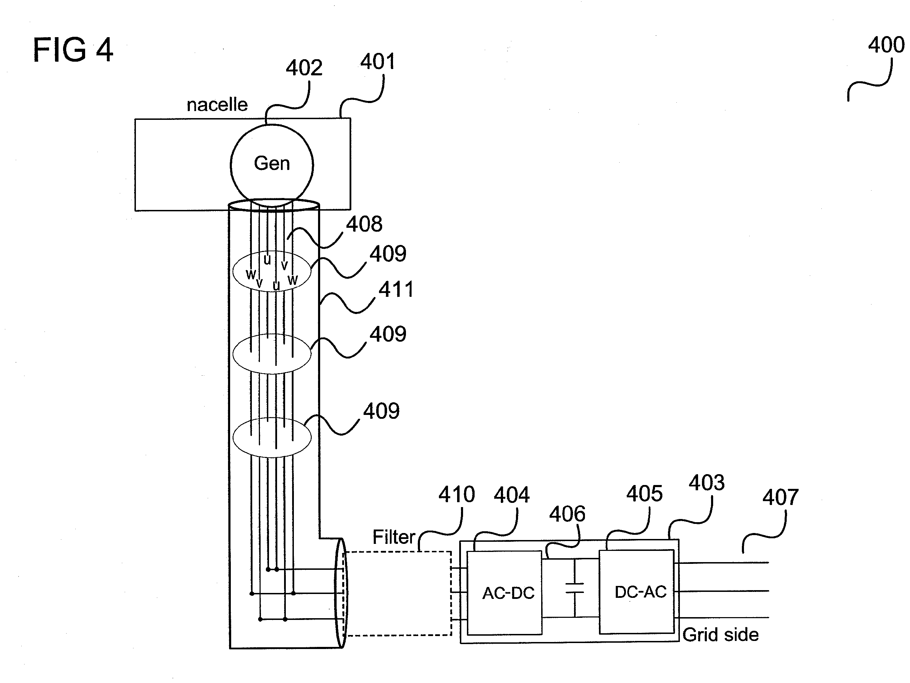

An embodiment including the features mentioned above is illustrated in Fig. 4.

Fig. 4 shows a wind turbine arrangement 400 according to an embodiment.

The wind turbine arrangement 400 includes, similarly to the wind turbine 1000 shown in Fig. 1, a nacelle 401 with a generator 402.

The wind turbine arrangement 400 further includes a power converter 403 which includes in this example, similarly to the wind turbine arrangement 200 shown in Fig. 2, an AC/DC converter 404 and a DC/AC converter 405 coupled by a DC link 406. The power converter 403 outputs the electrical power converter (e.g. with regard to the rotary frequency) to the power grid side 407.

The currents output by the (electromechanic) power generator 402 are conducted by cables 408 from the nacelle (at the top of the wind turbine tower which is not shown for simplicity) to the bottom of the wind turbine tower at which the power converter 403 is located.

In this example, six cables 408 are used wherein for each phase of the three phases (indicated by u, v, and w) two cables are used.

The cables 408 extend from the top of the wind turbine tower to the bottom of the wind turbine tower, for example within the wind turbine tower. The cables 408 are guided by floating spacers 409 which are for example not fixed to the wind turbine tower but are only attached to the cables 408 or for example by a rope (not shown) extending through the centers of the spacers 409.

The cables 408 extend through through-holes of the spacers 409 and are for example arranged such that the cables carrying different phases are interleaved.

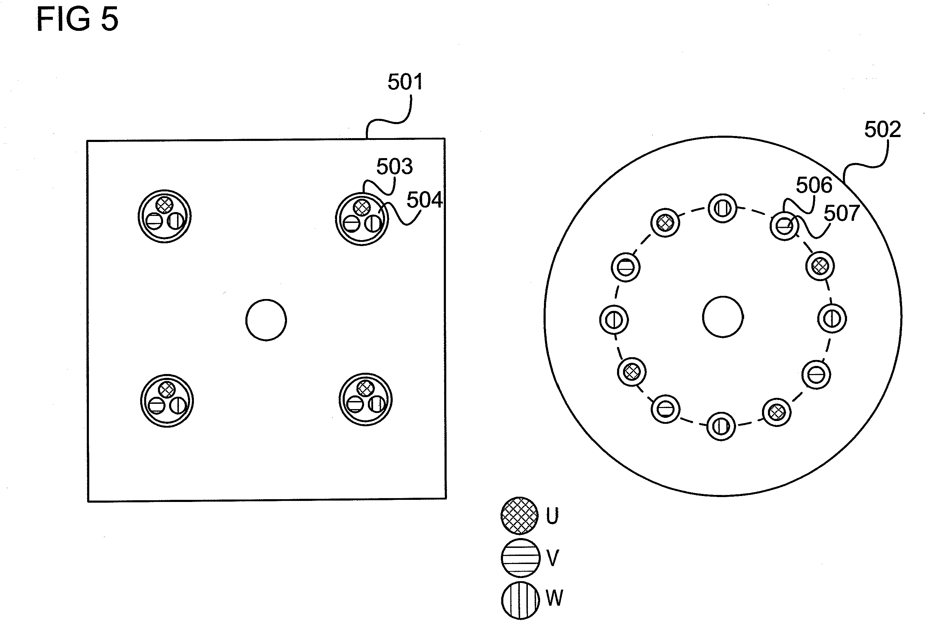

This is illustrated in greater detail in Fig. 5.

Fig. 5 shows a first spacer 501 and a second spacer 502 according to an embodiment.

The first spacer 501 is used with trifilar cables, each cable having three conductors and carrying all three phases (each phase by one conductor) and the second spacer 502 is used with single conductor cables, each carrying one phase. The phases are denoted by u, v, w and it is indicated by different hatchings 509 which phase is carried by which conductor.

In this example, it is assumed that for each phase, there are four conducters (i.e. double of what is illustrated in Fig. 4).

According to one embodiment, the first spacer 501 may be used for the spacers 409. In this example, the first spacer 501 includes four cable through-holes 503 through which trifilar cables 504 extend. The first spacer 501 may further include a suspension through-hole 505 via which it may be suspended, e.g. using a rope extending through the suspension through-hole 505 to be floating, i.e. to freely follow a twisting of the cable system formed by the cables 504 when the nacelle 401 turns in the horizontal plane. The first spacer 501 is illustrated to be of square form but may have any other geometric form.

The spacers 501, 502, 409 used are for example (substantially) flat and are arranged for example arranged (substantially) horizontally within the wind turbine tower.

The second spacer 502 includes twelve cable through-holes 506 wherein though each cable through-hole 506, one of twelve single conductor cables 507 extends.

Similarly to the first spacer 501, the second spacer 502 may include a suspension through-hole 508.

It should be noted that the usage of the second spacer 502 having single conductor cables 507 provides a less rigid system (of cables and spacers) than the usage of the first spacer 501. However, usage of the first spacer 501 with trifilar cables 504 may be desirable since less room is required to keep cable clearances during twisting than when using the second spacer 502 with single conductor cables 507.

A cable system using single conductor cables may also be more efficient than a cable system using multifilar (such as trifilar) cables in terms of power loss. As an example, with the trifilar cable with ground shielding, Windflex Power 7.2kV by Draka (240 mm² cross section) there is an AC penalty of 1.163 at 110kHz while with the single conductor cable Silicoul 6.6kV by Omerin (240 mm² cross section) there is an AC penalty of 1.056 at 110kHz (wherein it is in both cases assumed that the cables are spaced apart from each other). Hereby, AC penalty of a conductor system is definded as the ratio between AC power loss (with high freuqency effects) and DC power loss (without high frequency effects) of the conductor system.

As illustrated, the cable through-holes 506 of the second spacer 502 are arranged along a circle (shown dashed) 510 and the phases are interleaved along the circle 510 i.e. the phases carried by the single conductor cables 507 extend through the cable through-holes 506 alternate along the circle 510.

The cables 408 connect the power generator 402 to the power converter 403 via a filter 410. The three phases are supplied to the filter 410 and filtered and output to the power converter 403.

It should be noted that a similar filter may also be arraned on the power grid side.

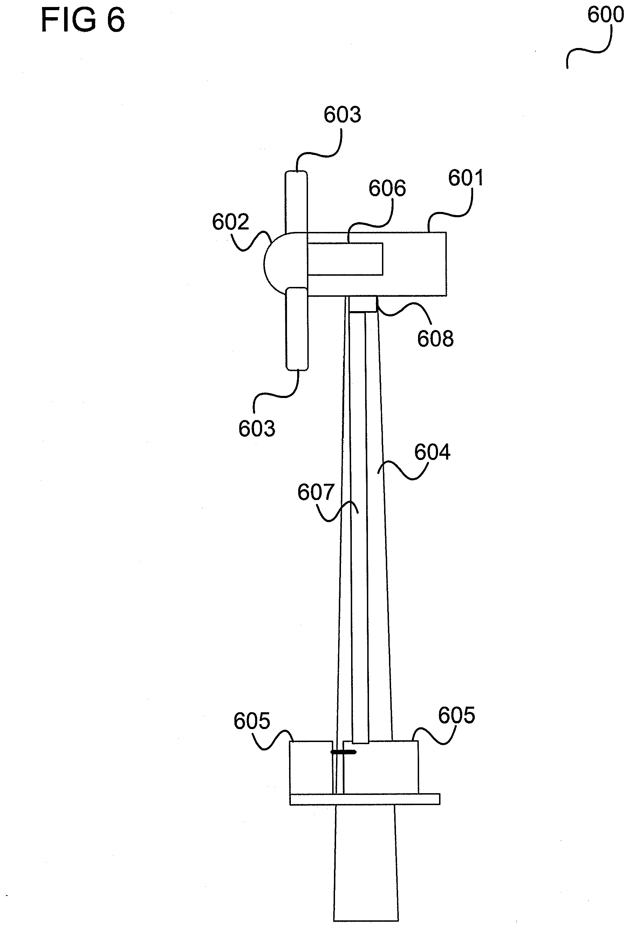

According to one embodiment, the cables 224 shielded by a shielding 411 to form a good high frequency return current path between the filter 410 and the generator 402. This is illustrated in figure 6.

Fig. 6 shows a wind turbine 600 according to an embodiment. Similarly to the wind turbine 100 shown in Fig. 1, the wind turbine 600 includes a nacelle 601, a hub 602, wind turbine blades 603, and a tower 604. The wind turbine 600 comprises containers 605 at the bottom of the tower 604 which may contain electric components such as an AC/DC converter, switchgear, and/or a transformer. The nacelle 601 for example includes a power generator 606 and may include various other components such as mechanical components of the drive train and brakes.

A cable tract 607 is located in the tower 604 containing wires or cables connecting the nacelle 601 (specifically for example an output of the power generator 606) to one or more electric components contained in the containers 605, e.g. with an AC/DC converter. The cable tract 607 encloses the cables within the tower 604. The cables may be medium voltage (or also low voltage cables) and may be single wires or single cables. The tract 607 may for example be a metallic housing and provide shielding of the cables against electromagnetic interference (in other words may provide electromagnetic compatibility (EMC) protection) and may provide shielding of the cables against lightning. Thus, cables and wires may be used in the tract 607 with little or no shielding effect. This may allow using thin cables which may be more easily twisted than cables with shielding.

Air or generally a cooling fluid may be sent through the tract 607 to cool the wires or cables. Further, the cables (or wires) may be mounted into the tower 604 by means of the tract 607 before the wind turbine 600 is installed (e.g. is assembled at its intended place of operation).

The cables in the tract 607 may be connected by means of a slip ring system 608 to the nacelle 601, e.g. to electrical components within the nacelle 601 such as the power generator 606. For example, the full power generated by the power generator 606 may be conducted by means of the slip ring system 608. This avoids that (possibly shielded) cables are twisted at the juction between the nacelle 601 and the tower 604 which may lead to problems, e.g. in cold condition.

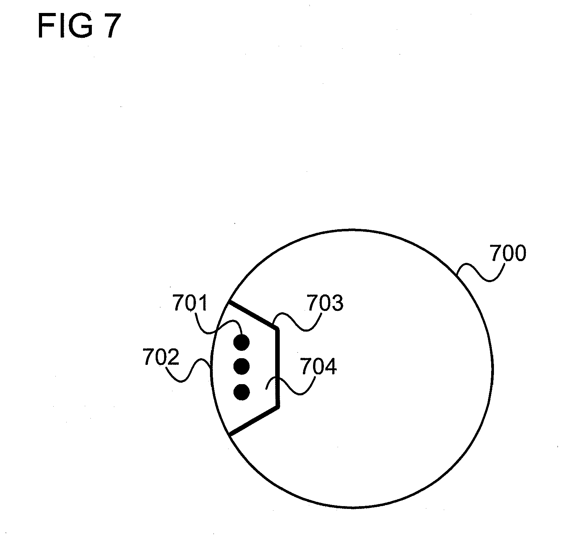

A part of the cable tract 607 may be formed by a part of the tower wall. This is illustrated in figure 7.

Fig. 7 shows a cross section of a wind turbine tower 700 according to an embodiment.

Wires 701 for connecting a generator at the top of the tower and a converter at the bottom of the tower extend through the tower 700. A part of the tower wall 702 forms together with a (e.g. metal) cover 703 a cable tract (or cable duct) 704, i.e. a .360 degree shielding of the wires (or cables 701). There is a good electrical connection between the tower 700 and the cover 703. This electrical connection is for example at the whole length of the cable duct 704 from the top of the tower 700 to the button of the tower 700.

While the invention has been particularly shown and described with reference to specific embodiments, it should be understood by those skilled in the art that various changes in form and detail may be made therein without departing from the scope of the invention as defined by the appended claims.

## Claims

1. A wind turbine arrangement (300, 400, 600) comprising:
a wind turbine tower (301, 604, 700);
a power generator (202, 302, 402, 606) arranged at the top of the wind turbine tower;
a power converter (303, 403) arranged at the bottom of the tower wherein the power converter (303, 403) is operated at a switching frequency within a switching frequency range;
a filter (232, 304, 410) arranged at the bottom of the tower wherein the filter is coupled to the power generator (202, 302, 402, 606) and the power converter (303, 403) such that the power generator (202, 302, 402, 606) is coupled to the power converter (303, 403) via the filter (232, 304, 410); wherein the filter (232, 304, 410) is coupled to the power generator (202, 302, 402, 606) by means of cables (224, 408, 504, 507, 701), and the filter (232, 304, 410) is connected to the power generator (202, 302, 402, 606) such that electric power generated by the generator (202, 302, 402, 606) is supplied via the cables (224, 408, 504, 507, 701) and via the filter (232, 304, 410) to the power converter (303, 403),
**characterized in that,**
the filter (232, 304, 410) has a bandwidth adapted such that it filters out currents at frequencies in the switching frequency range, and
wherein at least one spacer (409, 501, 502) is attached to the cables for spacing apart the cables (224, 408, 504, 507, 701).

2. The wind turbine arrangement (300, 400, 600) according to claim 1, wherein the filter is a low pass filter, and the cut-off frequency of the filter is below the minimum switching frequency at which the power generator (202, 302, 402, 606) is operated.

3. The wind turbine arrangement (300, 400, 600) according to claim 2, wherein the power generator (202, 302, 402, 606) is configured to provide rotary electrical current and the cut-off frequency of the filter is above the maximum rotary frequency of the rotary electrical current provided by the power generator (202, 302, 402, 606).

4. The wind turbine arrangement (300, 400, 600) according to claim 1, wherein the cables (408, 504, 507) extend through through-holes (503, 506) in the spacer (409, 501, 502), and the through-holes (503, 506) are arranged and the cables (408, 504, 507) extend through the through-holes (503, 506) in the spacer (409, 501, 502) such that cables (408, 504, 507) carrying different phases of current supplied by the power generator (202, 302, 402, 606) are interleaved along the arrangement of through-holes (503, 506).

5. The wind turbine arrangement (300, 400, 600) according to claim 4, wherein the cables (408, 504, 507) include at least one grounding cable and the through-holes (503, 506) are arranged and the cables (408, 504, 507) extend through the through-holes (503, 506) in the spacer (409, 501, 502) such that the cables (408, 504, 507) carrying phases of current supplied by the power generator (202, 302, 402, 606) are at least partially interleaved with grounding cables along the arrangement of through-holes (503, 506).

6. The wind turbine arrangement (300, 400, 600) according to any one of the preceding claims, wherein the at least one spacer (409, 501, 502) is not fixedly attached to the wind turbine tower (301, 604, 700).

7. The wind turbine arrangement (300, 400, 600) according to any one of the preceding claims wherein the at least one spacer (409, 501, 502) is suspended by at least one suspension rope.

8. The wind turbine arrangement (300, 400, 600) according to any one of the preceding claims, wherein the at least one spacer (409, 501, 502) is suspended within the wind turbine tower (301, 604, 700) such that its distance to the bottom of the wind turbine tower (301, 604, 700) may change.

9. The wind turbine arrangement (300, 400, 600) according to any one of the preceding claims, wherein the at least one spacer (409, 501, 502) is suspended within the wind turbine tower (301, 604, 700) such that the its distance to the walls of the wind turbine tower (301, 604, 700) may change.

10. The wind turbine arrangement (300, 400, 600) according to any one of the preceding claims, wherein the cables are single conductor cables (507).

11. The wind turbine arrangement (300, 400, 600) according to any one of the preceding claims, wherein the cables (408, 504, 507) are cables designed to conduct currents of between 1kV and 35kV AC.

12. The wind turbine arrangement (300, 400, 600) according to any one of the preceding claims, wherein the cables are connected to the power generator (606) by means of a slip ring system (608).

13. The wind turbine arrangement (300, 400, 600) according to any one of the preceding claims, wherein the wind turbine tower (604, 700) comprises a cable tract (607, 704) and the cables extend along the tower within the cable tract (607, 704).

14. The wind turbine arrangement (300, 400, 600) according to any one of the preceding claims, further including a dv/dt filter arranged such that the power generator (202, 302, 402, 606) and the power converter (303, 403) are connected via the dv/dt filter.

## Patentansprüche

1. Windturbinenanordnung (300, 400, 600), umfassend:
einen Windturbinenturm (301, 604, 700);
einen Leistungsgenerator (202, 302, 402, 606), der an der Spitze des Windturbinenturms angeordnet ist;
einen Stromrichter (303, 403), der am Boden des Turms angeordnet ist, wobei der Stromrichter (303, 403) auf einer Schaltfrequenz innerhalb eines Schaltfrequenzbereichs betrieben wird;
einen Filter (232, 304, 410), der am Boden des Turms angeordnet ist, wobei der Filter derart mit dem Leistungsgenerator (202, 302, 402, 606) und dem Stromrichter (303, 403) gekoppelt ist, dass der Leistungsgenerator (202, 302, 402, 606) über den Filter (232, 304, 410) mit dem Stromrichter (303, 403) gekoppelt ist;
wobei der Filter (232, 304, 410) mittels Kabeln (224, 408, 504, 507, 701) mit dem Leistungsgenerator (202, 302, 402, 606) gekoppelt ist, und der Filter (232, 304, 410) derart mit dem Leistungsgenerator (202, 302, 402, 606) verbunden ist, dass die vom Generator (202, 302, 402, 606) erzeugte elektrische Leistung über die Kabel (224, 408, 504, 507, 701) und über den Filter (232, 304, 410) dem Stromrichter (303, 403) zugeführt wird,
**dadurch gekennzeichnet, dass**
der Filter (232, 304, 410) eine Bandbreite aufweist, die derart angepasst ist, dass sie Ströme auf Frequenzen im Schaltfrequenzbereich ausfiltert, und
wobei mindestens ein Abstandshalter (409, 501, 502) zum Beabstanden der Kabel (224, 408, 504, 507, 701) an den Kabeln angebracht ist.

2. Windturbinenanordnung (300, 400, 600) nach Anspruch 1, wobei der Filter ein Tiefpassfilter ist, und die Grenzfrequenz des Filters unter der minimalen Schaltfrequenz liegt, auf welcher der Leistungsgenerator (202, 302, 402, 606) betrieben wird.

3. Windturbinenanordnung (300, 400, 600) nach Anspruch 2, wobei der Leistungsgenerator (202, 302, 402, 606) dazu ausgebildet ist, elektrischen Drehstrom bereitzustellen, und die Grenzfrequenz des Filters über der maximalen Drehfrequenz des vom Leistungsgenerator (202, 302, 402, 606) bereitgestellten elektrischen Drehstroms liegt.

4. Windturbinenanordnung (300, 400, 600) nach Anspruch 1, wobei sich die Kabel (408, 504, 507) durch Durchgangslöcher (503, 506) im Abstandshalter (409, 501, 502) hindurch erstrecken, und die Durchgangslöcher (503, 506) derart angeordnet sind und sich die Kabel (408, 504, 507) durch die Durchgangslöcher (503, 506) im Abstandshalter (409, 501, 502) hindurch erstrecken, dass Kabel (408, 504, 507), die verschiedene vom Leistungsgenerator (202, 302, 402, 606) zugeführte Stromphasen übertragen, entlang der Anordnung von Durchgangslöchern (503, 506) verschachtelt sind.

5. Windturbinenanordnung (300, 400, 600) nach Anspruch 4, wobei die Kabel (408, 504, 507) mindestens ein Erdungskabel einschließen, und die Durchgangslöcher (503, 506) derart angeordnet sind und sich die Kabel (408, 504, 507) durch die Durchgangslöcher (503, 506) im Abstandshalter (409, 501, 502) hindurch erstrecken, dass die Kabel (408, 504, 507), die vom Leistungsgenerator (202, 302, 402, 606) zugeführte Stromphasen übertragen, entlang der Anordnung von Durchgangslöchern (503, 506) mindestens teilweise mit Erdungskabeln verschachtelt sind.

6. Windturbinenanordnung (300, 400, 600) nach einem der vorstehenden Ansprüche, wobei der mindestens eine Abstandshalter (409, 501, 502) nicht fest am Windturbinenturm (301, 604, 700) angebracht ist.

7. Windturbinenanordnung (300, 400, 600) nach einem der vorstehenden Ansprüche, wobei der mindestens eine Abstandshalter (409, 501, 502) über mindestens ein Aufhängungsseil aufgehängt ist.

8. Windturbinenanordnung (300, 400, 600) nach einem der vorstehenden Ansprüche, wobei der mindestens eine Abstandshalter (409, 501, 502) innerhalb des Windturbinenturms (301, 604, 700) derart aufgehängt ist, dass sich sein Abstand zum Boden des Windturbinenturms (301, 604, 700) verändern kann.

9. Windturbinenanordnung (300, 400, 600) nach einem der vorstehenden Ansprüche, wobei der mindestens eine Abstandshalter (409, 501, 502) innerhalb des Windturbinenturms (301, 604, 700) derart aufgehängt ist, dass sich sein Abstand zu den Wänden des Windturbinenturms (301, 604, 700) verändern kann.

10. Windturbinenanordnung (300, 400, 600) nach einem der vorstehenden Ansprüche, wobei die Kabel Einleiterkabel (507) sind.

11. Windturbinenanordnung (300, 400, 600) nach einem der vorstehenden Ansprüche, wobei die Kabel (408, 504, 507) Kabel sind, die dafür ausgelegt sind, Ströme von zwischen 1 kV und 35 kV Wechselstrom zu leiten.

12. Windturbinenanordnung (300, 400, 600) nach einem der vorstehenden Ansprüche, wobei die Kabel mittels eines Schleifringsystems (608) mit dem Leistungsgenerator (606) verbunden sind.

13. Windturbinenanordnung (300, 400, 600) nach einem der vorstehenden Ansprüche, wobei der Windturbinenturm (604, 700) einen Kabelschacht (607, 704) umfasst, und sich die Kabel entlang des Turms innerhalb des Kabelschachts (607, 704) erstrecken.

14. Windturbinenanordnung (300, 400, 600) nach einem der vorstehenden Ansprüche, weiter einen dv/dt-Filter einschließend, der derart angeordnet ist, dass der Leistungsgenerator (202, 302, 402, 606) und der Stromrichter (303, 403) über den dv/dt-Filter verbunden sind.

## Revendications

1. Agencement d'éolienne (300, 400, 600) comprenant :
un mât d'éolienne (301, 604, 700) ;
un générateur de puissance (202, 302, 402, 606) agencé au sommet du mât d'éolienne ;
un convertisseur de puissance (303, 403) agencé au pied du mât dans lequel le convertisseur de puissance (303, 403) fonctionne à une fréquence de commutation comprise dans une plage de fréquences de commutation ;
un filtre (232, 304, 410) agencé au pied du mât dans lequel le filtre est couplé au générateur de puissance (202, 302, 402, 606) et au convertisseur de puissance (303, 403) de telle sorte que le générateur de puissance (202, 302, 402, 606) est couplé au convertisseur de puissance (303, 403) par l'intermédiaire du filtre (232, 304, 410) ;
dans lequel le filtre (232, 304, 410) est couplé au générateur de puissance (202, 302, 402, 606) au moyen de câbles (224, 408, 504, 507, 701), et le filtre (232, 304, 410) est relié au générateur de puissance (202, 302, 402, 606) de telle sorte que l'énergie électrique générée par le générateur (202, 302, 402, 606) est fournie par l'intermédiaire des câbles (224, 408, 504, 507, 701) et par l'intermédiaire du filtre (232, 304, 410) au convertisseur de puissance (303, 403),
**caractérisé en ce que,**
le filtre (232, 304, 410) possède une largeur de bande adaptée de telle sorte qu'il élimine par filtrage les courants à des fréquences comprises dans la plage de fréquences de commutation, et
dans lequel au moins une entretoise (409, 501, 502) est fixée aux câbles pour séparer les câbles (224, 408, 504, 507, 701) les uns des autres.

2. Agencement d'éolienne (300, 400, 600) selon la revendication 1, dans lequel le filtre est un filtre passe-bas, et la fréquence de coupure du filtre est inférieure à la fréquence de commutation minimale à laquelle fonctionne le générateur de puissance (202, 302, 402, 606).

3. Agencement d'éolienne (300, 400, 600) selon la revendication 2, dans lequel le générateur de puissance (202, 302, 402, 606) est configuré pour fournir un courant électrique rotatif et la fréquence de coupure du filtre est supérieure à la fréquence de rotation maximale du courant électrique rotatif fourni par le générateur de puissance (202, 302, 402, 606).

4. Agencement d'éolienne (300, 400, 600) selon la revendication 1, dans lequel les câbles (408, 504, 507) s'étendent à travers des trous traversants (503, 506) de l'entretoise (409, 501, 502), et les trous traversants (503, 506) sont agencés et les câbles (408, 504, 507) s'étendent à travers les trous traversants (503, 506) de l'entretoise (409, 501, 502) de telle sorte que des câbles (408, 504, 507) transportant différentes phases d'un courant fourni par le générateur de puissance (202, 302, 402, 606) sont entrelacés le long de l'agencement de trous traversants (503, 506).

5. Agencement d'éolienne (300, 400, 600) selon la revendication 4, dans lequel les câbles (408, 504, 507) comprennent au moins un câble de terre et les trous traversants (503, 506) sont agencés et les câbles (408, 504, 507) s'étendent à travers les trous traversants (503, 506) de l'entretoise (409, 501, 502) de telle sorte que les câbles (408, 504, 507) transportant des phases d'un courant fourni par le générateur de puissance (202, 302, 402, 606) sont entrelacés au moins partiellement avec des câbles de terre le long de l'agencement de trous traversants (503, 506).

6. Agencement d'éolienne (300, 400, 600) selon l'une quelconque des revendications précédentes, dans lequel l'au moins une entretoise (409, 501, 502) n'est pas fixée à demeure au mât d'éolienne (301, 604, 700).

7. Agencement d'éolienne (300, 400, 600) selon l'une quelconque des revendications précédentes dans lequel l'au moins une entretoise (409, 501, 502) est suspendue par au moins une corde de suspension.

8. Agencement d'éolienne (300, 400, 600) selon l'une quelconque des revendications précédentes, dans lequel l'au moins une entretoise (409, 501, 502) est suspendue dans le mât d'éolienne (301, 604, 700) de telle sorte que sa distance par rapport au pied du mât d'éolienne (301, 604, 700) peut changer.

9. Agencement d'éolienne (300, 400, 600) selon l'une quelconque des revendications précédentes, dans lequel l'au moins une entretoise (409, 501, 502) est suspendue dans le mât d'éolienne (301, 604, 700) de telle sorte que sa distance par rapport aux parois du mât d'éolienne (301, 604, 700) peut changer.

10. Agencement d'éolienne (300, 400, 600) selon l'une quelconque des revendications précédentes, dans lequel les câbles sont des câbles à conducteur simple (507).

11. Agencement d'éolienne (300, 400, 600) selon l'une quelconque des revendications précédentes, dans lequel les câbles (408, 504, 507) sont des câbles conçus pour conduire des courants compris entre 1 kV et 35 kV CA.

12. Agencement d'éolienne (300, 400, 600) selon l'une quelconque des revendications précédentes, dans lequel les câbles sont reliés au générateur de puissance (606) au moyen d'un système de bague collectrice (608).

13. Agencement d'éolienne (300, 400, 600) selon l'une quelconque des revendications précédentes, dans lequel le mât d'éolienne (604, 700) comprend un passage de câbles (607, 704) et les câbles s'étendent le long du mât dans le passage de câbles (607, 704).

14. Agencement d'éolienne (300, 400, 600) selon l'une quelconque des revendications précédentes, comprenant en outre un filtre dV/dt agencé de telle sorte que le générateur de puissance (202, 302, 402, 606) et le convertisseur de puissance (303, 403) sont reliés par l'intermédiaire du filtre dV/dt.
